(19) Europäisches Patentamt
European Patent Office
Office européen des brevets

(11) Publication number : **0 344 328 B1**

(12) # EUROPEAN PATENT SPECIFICATION

(45) Date of publication of patent specification : **08.03.95 Bulletin 95/10**

(51) Int. Cl.$^6$ : **H01B 3/44**

(21) Application number : **89900150.7**

(22) Date of filing : **02.12.88**

(86) International application number : **PCT/JP88/01220**

(87) International publication number : **WO 89/05511 15.06.89 Gazette 89/13**

(54) **METHOD FOR MAKING AN INSULATED CABLE.**

(30) Priority : **03.12.87 JP 306485/87**
**03.12.87 JP 306486/87**
**03.12.87 JP 306487/87**
**28.10.88 JP 274329/88**
**28.10.88 JP 274330/88**
**28.10.88 JP 274331/88**
**28.10.88 JP 274332/88**
**28.10.88 JP 274333/88**
**28.10.88 JP 274334/88**

(43) Date of publication of application : **06.12.89 Bulletin 89/49**

(45) Publication of the grant of the patent : **08.03.95 Bulletin 95/10**

(84) Designated Contracting States : **DE FR**

(56) References cited :
**EP-A- 0 297 414**
**DE-A- 3 242 434**
**JP-A- 5 352 557**
**US-A- 4 469 538**
**DATABASE DERWENT WORLD PATENT INDEX, AN89-141330, Derwent Publications Ltd; & JP-A-01 086 407**

(73) Proprietor : **SUMITOMO ELECTRIC INDUSTRIES LIMITED**
**No. 15, Kitahama 5-chome,**
**Higashi-ku**
**Osaka-shi, Osaka 541 (JP)**

(72) Inventor : **KONDO, Mamoru**
**Osaka Works, Sumitomo Electr. Ind.,**
**1-3, Shimaya**
**1-chome Konohana-ku Osaka-shi, Osaka 554 (JP)**
Inventor : **SEKIGUCHI, Yoitsu**
**Osaka Works, Sumitomo Elect. Ind,**
**1-3, Shimaya**
**1-chome Konohana-ku Osaka-shi, Osaka 554 (JP)**
Inventor : **INOUE, Yoshiyuki**
**Osaka Works, Sumitomo Electr. Ind.,**
**1-3, Shimaya**
**1-chome Konohana-ku Osaka-shi, Osaka 554 (JP)**

(74) Representative : **Bankes, Stephen Charles Digby et al**
**BARON & WARREN**
**18 South End**
**Kensington**
**London W8 5BU (GB)**



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a cross-linked polyolefinic resin insulated cable of superior long-term stability.

Cross-linked polyolefinic resins have been used for insulated cables in addition to oil filled (OF) cables. The cross-linked polyolefinic resin cables are being widely used in place of OF cables due to their easy maintenance, reduced transmission loss and the like. However, cross-linked polyolefinic resin cables have a disadvantage in that they are inferior to OF cables in long-term stability. In order to improve this disadvantage, various investigations have been carried out.

Water is one factor having an effect upon the long-term stability of the cross-linked polyolefinic resin cable. It is known that if water is present it collects in foreign matter and voids in an insulator or in high electric field portions, such as irregular portions of boundaries between the insulator and an internal semiconductor layer and an external semiconductor layer to form an electrically conductive dendritic channel called a 'water tree'. This can eventually lead to dielectric breakdown.

Accordingly, also an insulated cable having a construction comprising a metallic layer formed on an outer side of the insulator has been used so as to prevent water from penetrating into the insulator from the outside.

The cross-linking method using high-pressure steam as a heat medium has been replaced by the so-called dry cross-linking method using a heater, a heated gas or the like instead of steam.

The cross-linking polyolefinic resin insulator used in the conventional insulated cable has used organic peroxides including a

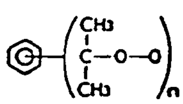

group (wherein n = 1 or 2) in a molecule as a cross-linking agent. However, it is known that in the case where for example dicumyl peroxide or 1, 3-bis (tertiary-butyl peroxy isopropyl) benzene are used as the cross-linking agent, water is generated as a decomposition residue when the composition is heated for a long time at high temperatures. A problem has occurred in that water is generated within the insulator in spite of the construction capable of preventing water from penetrating from the outside.

That is to say, a problem has occurred in that dicumyl peroxide generates water ($H_2O$) when heated for a long time at high temperatures, as shown in the following equation:

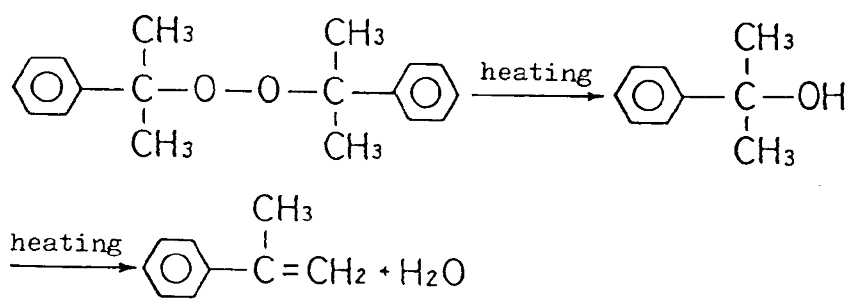


Also 1, 3-bis(tertiary-butyl peroxy isopropyl)benzene has shown a problem in that water is generated when the insulator is heated for a long time at high temperatures in the same manner as for dicumyl peroxide, as shown in the following equation.

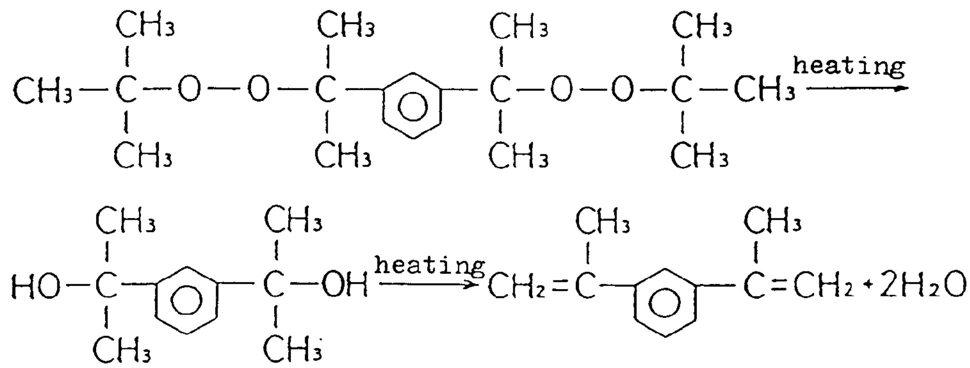


Accordingly, also the use of the cross-linking agents, such as 2, 5-dimethyl-2, 5-bis(tertiary-butyl peroxy) hexyne 3, in addition to dicumyl peroxide and 1, 3-bis(tertiary-butyl peroxy isopropyl) benzene has been proposed but these cross-linking agents have been expensive in comparison with dicumyl peroxide and 1, 3-bis(tertiary-butyl peroxy isopropyl)benzene and inferior in crosslinking efficiency and thus short of practicality.

The present inventors have achieved the present invention as a result of their investigation aiming at the prevention of the generation of water in the case where organic peroxides, such as dicumyl peroxide ad 1, 3-bis(tertiary-butyl peroxy isopropyl)benzene, including a

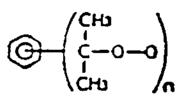

group (wherein n = 1 or 2) in a molecule are used as a cross-linking agent in an insulated cable with cross-linked polyolefinic resins as an insulating layer in view of the above described points.

According to the present invention, there is provided a method of making an insulated cable which includes the steps of:

adding to a polyethylene resin, selected from high pressure-low density polyethylene, low pressure-low density polyethylene, and ethylene-ethyl acrylate copolymer and an ethylene-vinyl acetate copolymer, dicumyl peroxide or 1, 3-bis (t-butyl peroxy isopropyl) benzene as a crosslinking agent,

forming, by a three-layer simultaneous extrusion method, an insulated cable having an insulating layer comprising said polyethylene with internal and external semiconducting layers, and

subjecting the cable thus formed to a dry crosslinking process,

characterised in that the composition extruded to form the insulating layer consists essentially of said resin, said cross linking agent and an additive selected from stearyl amine, oleylamine, zinc stearate, barium stearate, oleylamide and stearyl amide, in an amount from 0.01 to 2 weight %.

The use of additives in accordance with the present invention prevents water, which is a decomposition residue of such cross-linking agents, from being generated. Although the mechanism of preventing water generation is not yet entirely clear, in the case where an organic peroxide including a

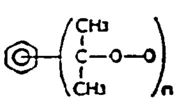

group (wherein n = 1 or 2) in a molecule, for example dicumyl peroxide, is used as the cross-linking agent, cumyl alcohol, which is a decomposition product, is further decomposed to form water. In addition, in the case where 1, 3-bis(tertiary-butyl peroxy isopropyl)benzene is used as the cross-linking agent, 1, 3-bis(2-hydroxy-2-propyl)benzene, which is a decomposition product of the former, is further decomposed to form water. It therefore appears that in the case where these cross-linking agents are used, the decomposition of cumyl alcohol and 1, 3-bis(2-hydroxy-2-propyl)benzene is suppressed by an effect of the additives if they are simultaneously used.

In the method of the present invention, the polyolefin is selected from low density polyethylene produced by the high-pressure or low-pressure method, ethylene-vinyl acetate and ethylene ethyl acrylate. In addition, dicumyl peroxide or 1, 3-bis(tertiary-butyl peroxy isopropyl) benzene is used as the cross-linking agent. These

cross-linking agents are used in a quantity capable of imparting a moderate degree of cross-linking to the polyolefinic resins, preferably of 1.0 to 3.0 % by weight.

If the water-reducing additives are used in a quantity less than 0.01 % by weight, water cannot be prevented from being generated from the cross-linking agents, while if they are used in a quantity exceeding 2 % by weight, the blooming is brought about on the surface of non-cross-linked polyolefinic resin pellets prior to turning into a cable, whereby the extrusion process cannot be stably carried out. The additives are therefore used in a quantity of 0.01 to 2 % by weight.

Further additives, such as antioxidants, for example 4, 4'-thiobis(6-tertiary-butyl-3-methyl phenol) and tetrakis[methylene-3-(3', 5'-di-tertiary-butyl-4'-hydroxyphenyl)propionate]methane, may if required be added to the composition forming the cross-linked polyolefinic resin insulating layer.

The use of the specified additives in accordance with the invention is particularly effective in the case where the insulating layer has a thickness of 7 to 35 mm, which makes the evaporation of a decomposition product of the cross-linking agents difficult.

In addition, although recently an insulated cable is generally provided with a metallic water-excluding layer to prevent water from penetrating from outside, this metallic water-excluding layer also prevents water generated within the insulating layer from evaporating to the outside.

Since the water content within the insulating layer in the insulated cable made according to the present invention is small, the provision of the metallic water-excluding layer outside of the insulating layer is remarkably effective.

Preferred embodiments of the invention are described in detail below by means of specific examples.

EXAMPLE 1

Polyolefinic resins having the physical characteristics, such as density and melt flow rate, shown in Table 1, dicumyl peroxide as the cross-linking agent as shown in Tables 2, 3 and aliphatic amines, such as stearyl amine and oleyl amine, as the additives were used and the resulting mixture was blended for 5 minutes at 120°C in a hot roll followed by pressing at 120°C by means of a hot press to produce a non-cross-linked sheet having a thickness of 20 mm.

The resulting non-cross-linked sheets were subjected to the dry heating for 60 minutes at 220°C in an atmosphere of nitrogen having a pressure of 490 kPa (5 kg/cm$^2$) and then taken out followed by sampling from the center thereof to measure the water content. In addition, the water content was measured by the Karl-Fischer micro water measurement method.

The results are shown in Tables 2, 3.

In addition, in the tables COMPARATIVE EXAMPLES are shown by sample Nos marked with *. This is also the case in the subsequent tables.

Table 1

| Item / Name of resin | Density (g/cm$^3$) | Melt flow rate | Note |
|---|---|---|---|
| Low-density polyethylene produced by the high pressure method | 0.92 | 2.0 | |
| Low-density polyethyelne produced by the low pressure method | 0.92 | 0.7 | |
| Ethylene-vinyl acetate | 0.92 | 2.0 | Comonomer-content: 5 % by weight |
| Ethylene-ethyl acrylate | 0.93 | 4.0 | Comonomer-content: 7 % by weight |

Table 2

(% by weight)

| Sample No | 1-1 * | 1-2 * | 1-3 | 1-4 | 1-5 | 1-6 | 1-7 * | 1-8 |
|---|---|---|---|---|---|---|---|---|
| Low-density polyethylene produced by the high pressure method | 97.5 | 97.495 | 97.49 | 97.4 | 96.5 | 95.5 | 94.5 | 97.4 |
| Dicumyl peroxide | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 |
| Stearyl amine | – | 0.005 | 0.01 | 0.1 | 1.0 | 2.0 | 3.0 | – |
| Oleyl amine | – | – | – | – | – | – | – | 0.1 |
| Water-content (ppm) | 520 | 380 | 30 | 10 | 10 | 10 | 10 | 10 |
| Evaluation | × | × | ○ | ○ | ○ | ○ | ○ | ○ |

Table 3

(% by weight)

| Sample No | 1-9* | 1-10 | 1-11 | 1-12* | 1-13 | 1-14 | 1-15* | 1-16 | 1-17 | 1-18 | 1-19 | 1-20 | 1-21 |
|---|---|---|---|---|---|---|---|---|---|---|---|---|---|
| Low-density polyethylene produced by the high pressure method | - | - | - | - | - | - | - | - | - | 50.0 | 75.0 | 50.0 | 75.0 |
| Low-density polyethyelne produced by the low pressure method | 97.5 | 97.4 | 97.4 | - | - | - | - | - | - | - | - | - | - |
| Ethylene-vinyl acetate | - | - | - | 97.5 | 97.4 | 97.4 | - | - | - | 47.4 | 22.4 | - | - |
| Ethylene-ethyl acrylate | - | - | - | - | - | - | 97.5 | 97.4 | 97.4 | - | - | 47.4 | 22.4 |
| Dicumyl peroxide | 2.0 | 2.0 | 2.0 | 2.0 | 2.0 | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 | 0.5 | 0.5 | 0.5 | 0.5 | 0.5 |
| Stearyl amine | - | 0.1 | - | - | 0.1 | - | - | 0.1 | - | 0.1 | 0.1 | - | - |
| Oleyl amine | - | - | 0.1 | - | - | 0.1 | - | - | 0.1 | - | - | 0.1 | 0.1 |
| Water-content (ppm) | 500 | 20 | 30 | 570 | 30 | 30 | 580 | 20 | 30 | 30 | 20 | 20 | 20 |
| Evaluation | × | ○ | ○ | × | ○ | ○ | × | ○ | ○ | ○ | ○ | ○ | ○ |

It is found from the above tables that in sample Nos. 1-1, 1-9,1-12 and 1-15, to which no aliphatic amine is added, water of 500 ppm or more is generated and also in the case where aliphatic amines are used in a quantity smaller than the scope of the present invention (sample No. 1-2), a large quantity of water (380 ppm) is generated while in the preferred embodiments of the present invention, to which aliphatic amines are added in a quantity of 0.01 to 2 % by weight. the water-content is 30 ppm or less, that is, water is remarkably prevented from generating.

In addition, in sample No. 1-7 the blooming was found on the surface thereof because aliphatic amines were added in a large quantity.

EXAMPLE 2

Cross-linked sheets were produced and their water-content was measured in the quite same manner as in EXAMPLE 1 excepting that metallic salts of fatty acids, such as zinc stearate and barium stearate, were used in place of aliphatic amines as the additives in EXAMPLE 1.

The results are shown in Table 4, 5.

Table 4

(% by weight)

| Sample No | 2-1 * | 2-2 * | 2-3 | 2-4 | 2-5 | 2-6 | 2-7 * | 2-8 |
|---|---|---|---|---|---|---|---|---|
| Low-density polyethylene produced by the high pressure method | 97.5 | 97.495 | 97.49 | 97.4 | 96.5 | 95.5 | 94.5 | 97.4 |
| Dicumyl peroxide | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 |
| Zinc stearate | – | 0.005 | 0.01 | 0.1 | 1.0 | 2.0 | 3.0 | – |
| Barium stearate | – | – | – | – | – | – | – | 0.1 |
| Water-content (ppm) | 520 | 480 | 30 | 30 | 10 | 20 | 10 | 20 |
| Evaluation | × | × | ○ | ○ | ○ | ○ | ○ | ○ |

Table 5

(% by weight)

| Sample No. | 2-9* | 2-10 | 2-11 | 2-12* | 2-13 | 2-14 | 2-15* | 2-16 | 2-17 | 2-18 | 2-19 | 2-20 | 2-21 |
|---|---|---|---|---|---|---|---|---|---|---|---|---|---|
| Low-density polyethylene produced by the high pressure method | – | – | – | – | – | – | – | – | – | 50.0 | 75.0 | 50.0 | 75.0 |
| Low-density polyethyelne produced by the low pressure method | 97.5 | 97.4 | 97.4 | – | – | – | – | – | – | – | – | – | – |
| Ethylene-vinyl acetate | – | – | – | 97.5 | 97.4 | 97.4 | – | – | – | 47.4 | 22.4 | – | – |
| Ethylene-ethyl acrylate | – | – | – | – | – | – | 97.5 | 97.4 | 97.4 | – | – | 47.4 | 22.4 |
| Dicumyl peroxide | 2.0 | 2.0 | 2.0 | 2.0 | 2.0 | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 | 0.5 | 0.5 | 0.5 | 0.5 | 0.5 |
| Zinc stearate | – | 0.1 | – | – | 0.1 | – | – | 0.1 | – | 0.1 | 0.1 | – | – |
| Barium stearate | – | – | 0.1 | – | – | 0.1 | – | – | 0.1 | – | – | 0.1 | 0.1 |
| Water-content (ppm) | 500 | 20 | 10 | 570 | 20 | 30 | 580 | 30 | 30 | 20 | 20 | 30 | 20 |
| Evaluation | × | ○ | ○ | × | ○ | ○ | × | ○ | ○ | ○ | ○ | ○ | ○ |

It is found from the above tables that in sample Nos. 2-1,2-9, 2-12 and 2-15, to which no metallic salt of

fatty acid is added, water of 500 ppm or more is generated and also in the case (sample No. 2-2), to which metallic salts of fatty acids are added in a quantity smaller than the scope of the present invention, a large quantity of water (480 ppm) is generated while in the preferred embodiments of the present invention, to which metallic salts of fatty acids are added in a quantity of 0.01 to 2 % by weight, the water-content is 30 ppm or less, that is, water is remarkably prevented from generating.

In addition, in sample No. 2-7 in the table 4 the blooming was found on the surface thereof because metallic salts of fatty acids were added in a large quantity.

EXAMPLE 3

Cross-linked sheets were produced and their water-content was measured in the quite same manner as in EXAMPLE 1 excepting that aliphatic amides, namely oleyl amide and stearyl amide, were used in place of aliphatic amines in EXAMPLE 1.

The results are shown in Tables 6, 7.

Table 6

(% by weight)

| Sample No | 3-1 * | 3-2 * | 3-3 | 3-4 | 3-5 | 3-6 | 3-7 * | 3-8 |
|---|---|---|---|---|---|---|---|---|
| Low-density polyethylene produced by the high pressure method | 97.5 | 97.495 | 97.49 | 97.4 | 96.5 | 95.5 | 94.5 | 97.4 |
| Dicumyl peroxide | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 |
| Oleyl amide | – | 0.005 | 0.01 | 0.1 | 1.0 | 2.0 | 3.0 | – |
| Stearyl amide | – | – | – | – | – | – | – | 0.1 |
| Water-content (ppm) | 520 | 450 | 10 | 10 | 20 | 10 | 10 | 30 |
| Evaluation | × | × | ○ | ○ | ○ | ○ | ○ | ○ |

Table 7

(% by weight)

| Sample No. | 3-9* | 3-10 | 3-11 | 3-12* | 3-13 | 3-14 | 3-15* | 3-16 | 3-17 | 3-18 | 3-19 | 3-20 | 3-21 |
|---|---|---|---|---|---|---|---|---|---|---|---|---|---|
| Low-density polyethylene produced by the high pressure method | - | - | - | - | - | - | - | - | - | 50.0 | 75.0 | 50.0 | 75.0 |
| Low-density polyethyelne produced by the low pressure method | 97.5 | 97.4 | 97.4 | - | - | - | - | - | - | - | - | - | - |
| Ethylene-vinyl acetate | - | - | - | 97.5 | 97.4 | 97.4 | - | - | - | 47.4 | 22.4 | - | - |
| Ethylene-ethyl acrylate | - | - | - | - | - | - | 97.5 | 97.4 | 97.4 | - | - | 47.4 | 22.4 |
| Dicumyl peroxide | 2.0 | 2.0 | 2.0 | 2.0 | 2.0 | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 | 0.5 | 0.5 | 0.5 | 0.5 | 0.5 |
| Oleyl amide | - | 0.1 | - | - | 0.1 | - | - | 0.1 | - | 0.1 | 0.1 | - | - |
| Stearyl amide | - | - | 0.1 | - | - | 0.1 | - | - | 0.1 | - | - | 0.1 | 0.1 |
| Water-content (ppm) | 500 | 20 | 10 | 570 | 20 | 20 | 580 | 10 | 20 | 20 | 30 | 30 | 20 |
| Evaluation | × | ○ | ○ | × | ○ | ○ | × | ○ | ○ | ○ | ○ | ○ | ○ |

It is found from the above tables that in sample Nos. 3-1, 3-9, 3-12 and 3-15, to which no aliphatic amide

is added, water 500 ppm or more is generated and also in the case (sample No. 3-2), to which the aliphatic amides are added in a quantity smaller than the scope of the present invention, a large quantity of water (450 ppm) is generated while in the preferred embodiments of the present invention, to which the aliphatic amides are added in a quantity of 0.01 to 2 % by weight, the water-content is 30 ppm or less, that is, water is remarkably prevented from generating.

In addition, in sample No. 3-7 in the table 6 the blooming was found on the surface thereof because the aliphatic amides were added in a large quantity.

EXAMPLE 4

Cables comprising insulating layers, which were formed of materials obtained by adding cross-linking agents and additives shown in Table 8 to low-density polyethylene resins produced by the high-pressure method, and semiconducting resins with carbon dispersed therein as internal semiconducting layers and external semiconducting layers were produced by the three-layer simultaneous extrusion method at 120°C and the resulting cables were subjected to the dry cross-linking treatment for about 60 minutes at 220°C in an atmosphere of nitrogen gas having a pressure of 5 $kg/cm^2$ to obtain insulated cables.

Then, the sampling was carried out from a central portion of the insulating layers of these insulated cables and their water-content was measured. The results are shown in Table 8.

Table 8

(% by weight)

| Sample No. | 4-1* | 4-2* | 4-3 | 4-4 | 4-5 | 4-6 | 4-7 | 4-8 |
|---|---|---|---|---|---|---|---|---|
| Low-density polyethylene produced by the high pressure method | 97.5 | 97.5 | 97.4 | 97.4 | 97.4 | 97.4 | 97.4 | 97.4 |
| Dicumyl peroxide | 2.0 | 2.0 | 2.0 | 2.0 | 2.0 | 2.0 | 2.0 | 2.0 |
| 4,4'-thiobis(6-tertiary-butyl-3-methylphenol) | 0.5 | | 0.5 | | 0.5 | | 0.5 | |
| Tetrakis[methylene-3-(3', 5'-di-tertiary butyl-4'-hydroxyphenyl) propyonate]methane | | 0.5 | | 0.5 | | 0.5 | | 0.5 |
| Stearyl amine | | | 0.1 | | | | | |
| Oleyl amine | | | | 0.1 | | | | |
| Zinc stearate | | | | | 0.1 | | | |
| Barium stearate | | | | | | 0.1 | | |
| Oleyl amide | | | | | | | 0.1 | |
| Stearyl amide | | | | | | | | 0.1 |
| Water-content (ppm) | 700 | 580 | 10 | 20 | 20 | 30 | 10 | 10 |
| Evaluation | × | × | ○ | ○ | ○ | ○ | ○ | ○ |

EXAMPLE 5

Cross-linked sheets were produced and their water-content was measured in the same manner as in EXAMPLE 1 excepting that 1, 3-bis(tertiary-butyl peroxy isopropyl)benzene was used as the cross-linking agent, as shown in Tables 9, 10, and aliphatic amines were used as the additives.

The results are shown in Tables 9, 10.

Table 9 (% by weight)

| Sample No. | 5-1 * | 5-2 * | 5-3 | 5-4 | 5-5 | 5-6 | 5-7 * | 5-8 |
|---|---|---|---|---|---|---|---|---|
| Low-density polyethylene produced by the high pressure method | 97.5 | 97.495 | 97.49 | 97.4 | 96.5 | 95.5 | 94.5 | 97.4 |
| 1, 3-bis(tertiary-butyl peroxy isopropyl) benzene | 2.0 | 2.0 | 2.0 | 2.0 | 2.0 | 2.0 | 2.0 | 2.0 |
| 4, 4'-thiobis(6-tertiary-butyl-3-methylphenol) | 0.5 | 0.5 | 0.5 | 0.5 | 0.5 | 0.5 | 0.5 | 0.5 |
| Stearyl amine | – | 0.005 | 0.01 | 0.1 | 1.0 | 2.0 | 3.0 | – |
| Oleyl amine | – | – | – | – | – | – | – | 0.1 |
| Water-content (ppm) | 650 | 520 | 20 | 10 | 10 | 20 | 10 | 20 |
| Evaluation | × | × | ○ | ○ | ○ | ○ | ○ | ○ |

Table 10

(% by weight)

| Sample No. | 5-9* | 5-10 | 5-11 | 5-12* | 5-13 | 5-14 | 5-15* | 5-16 | 5-17 | 5-18 | 5-19 | 5-20 | 5-21 |
|---|---|---|---|---|---|---|---|---|---|---|---|---|---|
| Low-density polyethylene produced by the high pressure method | - | - | - | - | - | - | - | - | - | 50.0 | 75.0 | 50.0 | 75.0 |
| Low-density polyethyelne produced by the low pressure method | 97.5 | 97.4 | 97.4 | - | - | - | - | - | - | - | - | - | - |
| Ethylene-vinyl acetate | - | - | - | 97.5 | 97.4 | 97.4 | - | - | - | 47.4 | 22.4 | - | - |
| Ethylene-ethyl acrylate | - | - | - | - | - | - | 97.5 | 97.4 | 97.4 | - | - | 47.4 | 22.4 |
| 1, 3-bis(tertiary-butyl peroxy isopropyl)benzene | 2.0 | 2.0 | 2.0 | 2.0 | 2.0 | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 | 0.5 | 0.5 | 0.5 | 0.5 | 0.5 |
| Stearyl amine | - | 0.1 | - | - | 0.1 | - | - | 0.1 | - | - | - | 0.1 | 0.1 |
| Oleyl amine | - | - | 0.1 | - | - | 0.1 | - | - | 0.1 | 0.1 | 0.1 | - | - |
| Water-content (ppm) | 540 | 20 | 30 | 570 | 10 | 20 | 530 | 20 | 20 | 20 | 30 | 20 | 20 |
| Evaluation | × | ○ | ○ | × | ○ | ○ | × | ○ | ○ | ○ | ○ | ○ | ○ |

It is found from the above Tables that in sample Nos. 5-1, 5-9, 5-12 and 5-15, to which no aliphatic amine is added, water of 500 ppm or more is generated and also in the case (sample No. 5-2), to which aliphatic amines are added in a quantity smaller than the scope of the present invention, a large quantity of water (520 ppm)

is generated while in the preferred embodiments according to the present invention, to which aliphatic amines are added in a quantity of 0.01 to 2 % by weight, the water-content is 30 ppm or less, that is, water is remarkably prevented from generating.

In addition, in sample No. 5-7 in Table 9 the blooming was found on the surface thereof because aliphatic amines were used in a large quantity.

EXAMPLE 6

Cross-linked sheets were produced and their water-content was measured in the same manner as in EXAMPLE 5 excepting that metallic salts of fatty acids, such as zinc stearate and barium stearate, were used as the additives in place of aliphatic amines in EXAMPLE 5.

The results are shown in Tables 11, 12.

Table 11 (% by weight)

| Sample No. | 6-1 * | 6-2 * | 6-3 | 6-4 | 6-5 | 6-6 | 6-7 * | 6-8 |
|---|---|---|---|---|---|---|---|---|
| Low-density polyethylene produced by the high pressure method | 97.5 | 97.495 | 97.49 | 97.4 | 96.5 | 95.5 | 94.5 | 97.4 |
| 1, 3-bis(tertiary-butyl peroxy isopropyl) benzene | 2.0 | 2.0 | 2.0 | 2.0 | 2.0 | 2.0 | 2.0 | 2.0 |
| 4, 4'-thiobis(6-tertiary-butyl-3-methylphenol) | 0.5 | 0.5 | 0.5 | 0.5 | 0.5 | 0.5 | 0.5 | 0.5 |
| Zinc stearate | − | 0.005 | 0.01 | 0.1 | 1.0 | 2.0 | 3.0 | − |
| Barium stearate | − | − | − | − | − | − | − | 0.1 |
| Water-content (ppm) | 650 | 510 | 30 | 10 | 10 | 20 | 10 | 20 |
| Evaluation | × | × | ○ | ○ | ○ | ○ | ○ | ○ |

Table 12

(% by weight)

| Sample No. | 6-9* | 6-10 | 6-11 | 6-12* | 6-13 | 6-14 | 6-15* | 6-16 | 6-17 | 6-18 | 6-19 | 6-20 | 6-21 |
|---|---|---|---|---|---|---|---|---|---|---|---|---|---|
| Low-density polyethylene produced by the high pressure method | - | - | - | - | - | - | - | - | - | 50.0 | 75.0 | 50.0 | 75.0 |
| Low-density polyethyelne produced by the low pressure method | 97.5 | 97.4 | 97.4 | - | - | - | - | - | - | - | - | - | - |
| Ethylene-vinyl acetate | - | - | - | 97.5 | 97.4 | 97.4 | - | - | - | 47.4 | 22.4 | - | - |
| Ethylene-ethyl acrylate | - | - | - | - | - | - | 97.5 | 97.4 | 97.4 | - | - | 47.4 | 22.4 |
| 1, 3-bis(tertiary-butyl peroxy isopropyl)benzene | 2.0 | 2.0 | 2.0 | 2.0 | 2.0 | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 | 0.5 | 0.5 | 0.5 | 0.5 | 0.5 |
| Zinc stearate | - | 0.1 | - | - | 0.1 | - | - | 0.1 | - | 0.1 | 0.1 | - | - |
| Barium stearate | - | - | 0.1 | - | - | 0.1 | - | - | 0.1 | - | - | 0.1 | 0.1 |
| Water-content (ppm) | 540 | 20 | 20 | 570 | 30 | 20 | 530 | 20 | 30 | 30 | 30 | 30 | 20 |
| Evaluation | × | ○ | ○ | × | ○ | ○ | × | ○ | ○ | ○ | ○ | ○ | ○ |

It is found from the above Tables that in sample Nos. 6-1, 6-9, 6-12 and 6-15, to which no metallic salt of fatty acid is added, water of 500 ppm or more is generated and also in the case (sample No. 6-2), to which metallic salts of fatty acids are added in a quantity smaller than the scope of the present invention, a large

quantity of water (510 ppm) is generated while in the preferred embodiments of the present invention, to which metallic salts of fatty acids are added in a quantity of 0.01 to 2 % by weight, the water-content is 30 ppm or less, that is, water is remarkably prevented from generating.

In addition, in sample No. 6-7 in Table 11 the blooming was found on the surface thereof because metallic salts of fatty acids were used in a large quantity.

EXAMPLE 7

Cross-linked sheets were produced and their water-content was measured in the same manner as in EXAMPLE 5 excepting that aliphatic amides, such as oleyl amide and stearyl amide, were used in place of aliphatic amines in EXAMPLE 5 as the additives. The results are shown in Tables 13, 14.

Table 13

(% by weight)

| Sample No. | 7-1 * | 7-2 * | 7-3 | 7-4 | 7-5 | 7-6 | 7-7 * | 7-8 |
|---|---|---|---|---|---|---|---|---|
| Low-density polyethylene produced by the high pressure method | 97.5 | 97.495 | 97.49 | 97.4 | 96.5 | 95.5 | 94.5 | 97.4 |
| 1, 3-bis(tertiary-butyl peroxy isopropyl) benzene | 2.0 | 2.0 | 2.0 | 2.0 | 2.0 | 2.0 | 2.0 | 2.0 |
| 4, 4'-thiobis(6-tertiary-butyl-3-methylphenol) | 0.5 | 0.5 | 0.5 | 0.5 | 0.5 | 0.5 | 0.5 | 0.5 |
| Oleyl amide | – | 0.005 | 0.01 | 0.1 | 1.0 | 2.0 | 3.0 | – |
| Stearyl amide | – | – | – | – | – | – | – | 0.1 |
| Water-content (ppm) | 650 | 450 | 20 | 20 | 10 | 10 | 10 | 20 |
| Evaluation | × | × | ○ | ○ | ○ | ○ | ○ | ○ |

Table 14

(% by weight)

| Sample No. | 7-9* | 7-10 | 7-11 | 7-12* | 7-13 | 7-14 | 7-15* | 7-16 | 7-17 | 7-18 | 7-19 | 7-20 | 7-21 |
|---|---|---|---|---|---|---|---|---|---|---|---|---|---|
| Low-density polyethylene produced by the high pressure method | - | - | - | - | - | - | - | - | - | 50.0 | 75.0 | 50.0 | 75.0 |
| Low-density polyethyelne produced by the low pressure method | 97.5 | 97.4 | 97.4 | - | - | - | - | - | - | - | - | - | - |
| Ethylene-vinyl acetate | - | - | - | 97.5 | 97.4 | 97.4 | - | - | - | 47.4 | 22.4 | - | - |
| Ethylene-ethyl acrylate | - | - | - | - | - | - | 97.5 | 97.4 | 97.4 | - | - | 47.4 | 22.4 |
| 1, 3-bis(tertiary-butyl peroxy isopropyl)benzene | 2.0 | 2.0 | 2.0 | 2.0 | 2.0 | 2.0 | 2.0 | 2.0 | 2.0 | 2.0 | 2.0 | 2.0 | 2.0 |
| 4,4'-thiobis(6-tertiary-butyl-3-methylphenol) | 0.5 | 0.5 | 0.5 | 0.5 | 0.5 | 0.5 | 0.5 | 0.5 | 0.5 | 0.5 | 0.5 | 0.5 | 0.5 |
| Oleyl amide | - | 0.1 | - | - | 0.1 | - | - | 0.1 | - | 0.1 | 0.1 | - | - |
| Stearyl amide | - | - | 0.1 | - | - | 0.1 | - | - | 0.1 | - | - | 0.1 | 0.1 |
| Water-content (ppm) | 540 | 20 | 30 | 570 | 20 | 10 | 530 | 30 | 20 | 30 | 30 | 30 | 20 |
| Evaluation | × | ○ | ○ | × | ○ | ○ | × | ○ | ○ | ○ | ○ | ○ | ○ |

It is found from the above Tables that in sample Nos. 7-1, 7-9, 7-12 and 7-15, to which no aliphatic amide is added, water of 500 ppm or more is generated and also in the case (sample No. 7-2) where aliphatic amides are added in a quantity smaller than the scope of the present invention, a large quantity of water (450 ppm) is generated while in the preferred embodiments of the present invention, to which aliphatic amides are added

in a quantity of 0.01 to 2 % by weight, the water-content is 30 ppm or less, that is, water is remarkably prevented from generating.

In addition, in sample No. 7-7 in Table 13 the blooming was found on the surface thereof because aliphatic amides were used in a large quantity.

EXAMPLE 8

Cables with materials comprising low-density polyethylene resins produced by the high-pressure method, to which the cross-linking agents and the additives shown in Table 15, as the insulating layers and semiconducting resins with carbon dispersed therein as the internal and external semiconducting layers were produced at 120°C by the three-layer simultaneous extrusion method and the resulting cables were subjected to the dry cross-linking treatment at 220°C about 60 minutes in an atmosphere of nitrogen gas having a pressure of 5 kg/cm$^2$ to obtain insulated cables.

Then, samples were sampled from a central portion of the insulating layers of the resulting insulated cables and their water-content was measured. The results are shown in Table 15.

Table 15

(% by weight)

| Sample No. | 8-1 * | 8-2 * | 8-3 | 8-4 | 8-5 | 8-6 | 8-7 | 8-8 |
|---|---|---|---|---|---|---|---|---|
| Low-density polyethylene produced by the high pressure method | 97.5 | 97.5 | 97.4 | 97.4 | 97.4 | 97.4 | 97.4 | 97.4 |
| 1, 3-bis(tertiary-butyl peroxy isopropyl)benzene | 2.0 | 2.0 | 2.0 | 2.0 | 2.0 | 2.0 | 2.0 | 2.0 |
| 4,4'-thiobis(6-tertiary-butyl-3-methylphenol) | 0.5 | | 0.5 | | 0.5 | | 0.5 | |
| Tetrakis[methylene-3-(3', 5'-di-tertiary butyl-4'-hydroxyphenyl) propyonate]methane | | 0.5 | | 0.5 | | 0.5 | | 0.5 |
| Stearyl amine | | | 0.1 | | | | | |
| Oleyl amine | | | | 0.1 | | | | |
| Zinc stearate | | | | | 0.1 | | | |
| Barium stearate | | | | | | 0.1 | | |
| Oleyl amide | | | | | | | 0.1 | |
| Stearyl amide | | | | | | | | 0.1 |
| Water-content (ppm) | 700 | 580 | 20 | 10 | 30 | 30 | 20 | 10 |
| Evaluation | × | × | ○ | ○ | ○ | ○ | ○ | ○ |

An insulated cable comprising insulating layers formed of polyolefinic resins cross-linked according to the

present invention is superior in long-term stability, and can therefore be used as an insulated cable having a particularly high operating electric field, because said insulating layers substantially prevent water from being generated by heating of the cross-linking agent.

## Claims

1. A method of making an insulated cable which includes the steps of:
   adding to a polyethylene resin, selected from high pressure-low density polyethylene, low pressure-low density polyethylene, and ethylene-ethyl acrylate copolymer and an ethylene-vinyl acetate copolymer, dicumyl peroxide or 1, 3-bis (t-butyl peroxy isopropyl) benzene as a cross-linking agent,
   forming, by a three-layer simultaneous extrusion method, an insulated cable having an insulating layer comprising said polyethylene with internal and external semiconducting layers, and
   subjecting the cable thus formed to a dry cross-linking process,
   characterised in that the composition extruded to form the insulating layer consists essentially of said resin, said cross linking agent and an additive selected from stearyl amine, oleylamine, zinc stearate, barium stearate, oleylamide and stearyl amide, in an amount from 0.01 to 2 weight %.

2. A method according to claim 1, wherein the composition extruded to form said insulating layer also contains an antioxidant.

3. A method according to claim 1 or claim 2 wherein the composition extruded to form said insulating layer comprises at least 95.5 weight % of said polyethylene resin.

4. A method according to any preceding claim wherein the composition extruded to form the insulating layer contains from 1.0 to 3.0 weight % of said cross-linking agent.

## Patentansprüche

1. Verfahren zur Herstellung eines isolierten Kabels, welches die Schritte beinhaltet, daß:
   zu einem Polyethylenharz, ausgewählt unter Hochdruckpolyethylen niedriger Dichte, Niederdruckpolyethylen niedriger Dichte und Ethylen-Ethylacrylat-Copolymer und einem Ethylen-Vinylacetat-Copoylmer, Dicumylperoxid oder 1,3-Bis-(tert-butylperoxyisopropyl)-benzol als ein Vernetzungsmittel zugesetzt wird,
   durch gleichzeitige Extrusion dreier Schichten ein isoliertes Kabel gebildet wird, das eine isolierende Schicht, welche das genannte Polyethylen umfaßt, mit halbleitenden Innen- und Außenschichten aufweist, und
   das so gebildete Kabel einem trockenen Vernetzungsprozeß unterworfen wird,
   dadurch gekennzeichnet, daß die für die Bildung der isolierenden Schicht extrudierte Zusammensetzung im wesentlichen aus dem genannten Harz, dem genannten Vernetzungsmittel und einem unter Stearylamin, Oleylamin, Zinkstearat, Bariumstearat, Oleylamid und Stearylamid ausgewählten Additiv in einer Menge von 0,01 bis 2 Gewichts-% besteht.

2. Verfahren nach Anspruch 1, bei dem die für die Bildung der isolierenden Schicht extrudierte Zusammensetzung außerdem ein Antioxidans enthält.

3. Verfahren nach Anspruch 1 oder Anspruch 2, bei dem die für die Bildung der isolierenden Schicht extrudierte Zusammensetzung zu mindestens 95,5 Gewichts-% das Polyethylenharz enthält.

4. Verfahren nach einem der vorhergehenden Ansprüche, bei dem die für die Bildung der isolierenden Schicht extrudierte Zusammensetzung zu 1,0 bis 3,0 Gewichts-% das Vernetzungsmittel enthält.

## Revendications

1. Procédé pour la fabrication d'un câble isolant qui comprend les étapes de :
   - ajouter à une résine polyéthylène, choisie dans le groupe constitué par le polyéthylène haute pression basse densité, le polyéthylène basse pression basse densité, et le copolymère acrylate éthylène-éthyle et un copolymère acétate éthylène-vinyle, du peroxyde dicumyle ou du 1,3-bis (t-butyle peroxy isopropyle)benzène comme agent de réticulation ;
- former, par un procédé d'extrusion simultanée à trois couches, un câble isolant ayant une couche isolante comprenant ledit polyéthylène avec des couches semiconductrices internes et externes et
- soumettre le câble ainsi formé à un procédé de réticulation à sec,

caractérisé en ce que la composition extrudée pour former la couche isolante consiste essentiellement en ladite résine, ledit agent de réticulation et un additif choisi dans le groupe constitué par la stearylamine, l'oleylamine, le stearate de zinc, le stearate de barium, l'oleylamide et le stearylamide, dans une quantité variant de 0,01 à 2% en poids.

**2.** Procédé selon la revendication 1, dans lequel la composition extrudée pour former ladite couche isolante contient également un antioxydant.

**3.** Procédé selon la revendication 1 ou la revendication 2, dans lequel la composition extrudée pour former ladite couche isolante comprend au moins 95,5% en poids de ladite résine polyéthylène.

**4.** Procédé selon l'une quelconque des revendications précédentes, dans lequel la composition extrudée pour former ladite couche isolante contient de 1,0 à 3,0% en poids dudit agent de réticulation.